(19)

Europäisches
Patentamt
European
Patent Office
Office européen
des brevets

(11) **EP 2 157 409 A2**

(12) **EUROPEAN PATENT APPLICATION**

(43) Date of publication:
**24.02.2010 Bulletin 2010/08**

(51) Int Cl.:
***G01D 5/14*** (2006.01)

(21) Application number: **09167192.5**

(22) Date of filing: **04.08.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **22.08.2008 JP 2008214454**

(71) Applicant: **KABUSHIKI KAISHA TOKAI RIKA
DENKI SEISAKUSHO
Niwa-gun,
Aichi 480-0195 (JP)**

(72) Inventor: **Kondo, Seiji
Aichi 480-0195 (JP)**

(74) Representative: **Sherrard-Smith, Hugh
Appleyard Lees
15 Clare Road
Halifax, West Yorkshire HX1 2HY (GB)**

(54) **Position detector**

(57)     A position detector includes a magnet which moves in cooperation with movement of a detection subject. A magnetic sensor detects magnetic flux generated from the magnet and outputs first and second detection signals from two output terminals. A signal processing circuit differentially amplifies the detection signals to generate an analog signal. A control unit calculates movement of the detection subject based on the analog signal. An abnormality detection circuit includes a switching element which connects one of the output terminals of the magnetic sensor to ground. The control unit determines an abnormality in the magnetic sensor and the signal processing circuit by comparing the voltage level of the analog signal with a predetermined determination level, which is the voltage level of the analog signal when the first switching element is activated during normal operation of the magnetic sensor and the signal processing circuit.

**Fig.6**

**Description**

This application is based upon and claims the benefit of priority from prior Japanese Patent Application No. 2008-214454, filed on August 22, 2008, the entire contents of which are incorporated herein by reference.

The present invention relates to a position detector for detecting the position of a detection subject.

Nowadays, vehicles include various types of systems for improving traveling stability, such as a vehicle stability control system and/or an electronic control suspension system. Such systems execute control for stabilizing vehicle handling based on steering angle of a steering wheel. To this end, a rotational angle detector is incorporated in, for example, a steering column of the vehicle to detect the rotational angle of the steering wheel. Such a type of a rotational angle detector may be of an absolute angle detection type that detects the steering angle in absolute values.

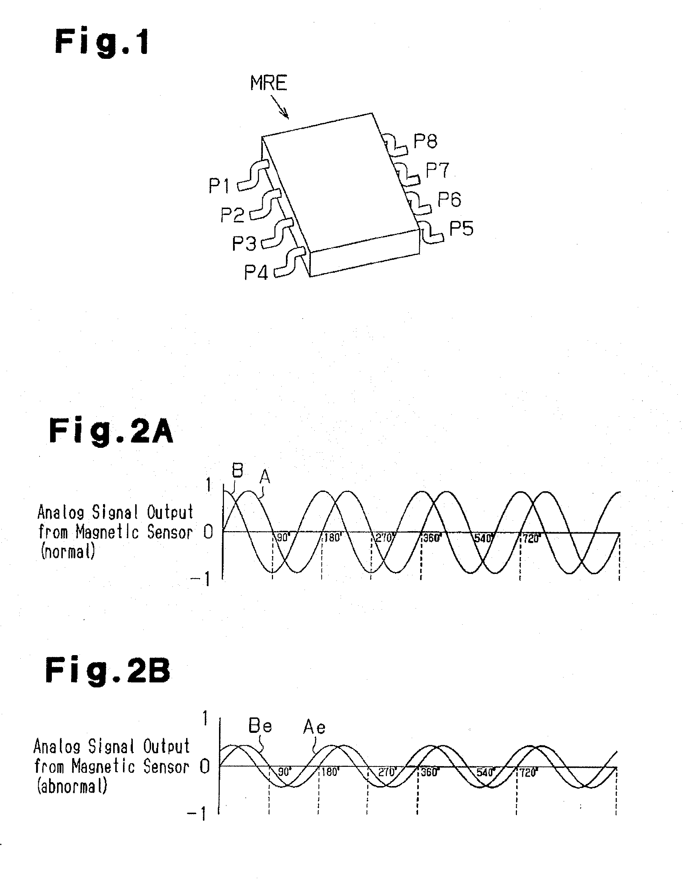

Japanese Laid-Open Patent Publication No. 2004-309222 describes the structure of a rotational angle detector of the absolute angle detection type that is known in the art. The rotational angle detector includes a main driving gear, which rotates integrally with a steering shaft, and first and second driven gears, which are engaged with the main driving gear. Each driven gear includes a magnet, which is rotated integrally with the driven gear. The two driven gears have different number of teeth so as that rotation of the driving gear rotates the driven gears to different rotational angles. A control unit of the rotational angle detector detects the rotational angles of the first and second driven gears with a magnetic sensor MRE, which is shown in Fig. 1 and arranged on each driven gear, to obtain the rotational angle of the main driving gear as an absolute value based on the detected rotational angles.

In more detail, as shown in Fig. 2A, each magnetic sensor MRE generates a first analog signal A with a sine wave and a second analog signal B with a cosine wave whenever the main driving gear (steering wheel) is rotated by a predetermined angle. The control unit determines the rotational angle θ of the main driving gear (steering wheel) based on the combination of the first analog signal A and the second analog signal B provided from the magnetic sensors MRE. Thus, even if a power supply is activated after the steering wheel is rotated and changed to a new rotational angle while the power supply is deactivated, the control unit may immediately determine the new rotational angle.

In the magnetic sensor MRE shown in Fig. 1, when adjacent terminals are short circuited, the output signal (voltage value) varies in an abnormal manner. This results in a calculation that is based on the output signals of both magnetic sensors MRE generating an erroneous rotational angle. If such an abnormality occurs when the power supply is activated, the control unit may detect the abnormality in the following manner. The control unit calculates the difference between the previous rotational angle of the steering wheel and the present rotational angle of the steering wheel. When the difference is greater than a predetermined threshold value, the control unit determines the occurrence of an abnormality occurred in a magnetic sensor MRE. This allows for an abnormality of the magnetic sensor MRE to be found when the power supply is activated.

However, an abnormality may occur when the power supply is deactivated. In the abnormality detection described above, comparisons are conducted based on the rotational angle of the steering wheel that is detected when the power is activated. Thus, if the detected rotational angle is already abnormal when the power supply is activated, it is difficult to find the abnormality of the magnetic sensor MRE.

The applicant has thus adopted an abnormality detection means for performing a radius check to detect an abnormality that occurs when the power supply is deactivated. The abnormality detection means calculates a radius value based on the voltage values of the first and the second analog signals A and B output from the magnetic sensors MRE to check the radius value (e.g., Japanese Laid-Open Patent Publication No. 2007-298291).

In more detail, in the radius check, a control unit first calculates a rotational angle based on the voltage value of the first analog signal A and the voltage value of the second analog signal B. The control unit also calculates the radius value r with the following equation.

$$r = \sqrt{\left(\text{voltage value of 1st analog signal}\right)^2 + \left(\text{voltage value of 2nd analog signal}\right)^2}$$

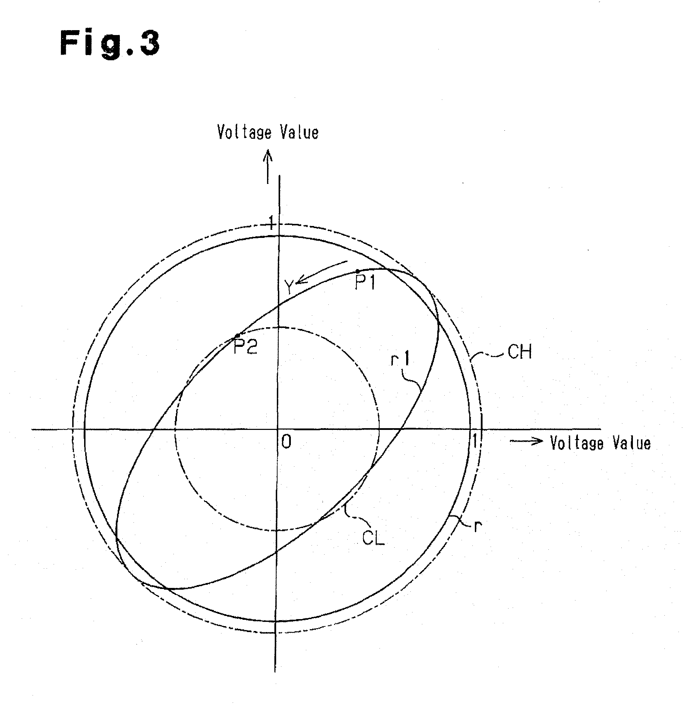

An abnormality of the magnetic sensor MRE is determined when the radius value r becomes greater than or equal to an upper limit CH or less than or equal to a lower limit CL. The upper limit CH and the lower limit CL are set in accordance with the characteristics of the magnetic sensor MRE. Referring to Fig. 2A, if the magnetic sensors MRE are both functioning normally, each magnetic sensor MRE outputs the first analog signal A and the second analog signal B with the same amplitude and a phase difference of 45° from each other. Therefore, if the radius value r is calculated by acquiring the analog signals A and B for a single cycle (corresponding to rotation of 180°) under a normal state, the path of the radius value r forms a substantially perfect circle, as shown in Fig. 3. For the path of the radius value r forming a substantially perfect circle, the upper limit CH is set to a value outside the circle, and the lower limit CL is set to a value lying along a concentric circle inside the circle. Accordingly, when the path of the radius value r is between the upper limit CH and the lower limit CL, the magnetic sensor MRE is determining as functioning normally.

Referring to Fig. 2B, compared to the normal analog signals A and B shown in Fig. 2A, first and second analog signals Ae and Be output from abnormal magnetic sensors MRE have smaller amplitudes and shifted phases. Therefore, the rotational angle of the steering wheel calculated by the control unit based on the first and the second analog signals Ae and Be, which are abnormal signals, include errors with respect to the actual steering rotational angle. In this case, the path of the radius value r1 for a single cycle of the analog signals Ae and Be in an abnormal state becomes substantially elliptical as shown in Fig. 3 and includes a portion for values smaller than the upper limit CH. For example, when the power supply is activated and the rotational angle of the steering wheel is detected, the radius value r1 corresponding to position P1 on the substantially elliptical path is obtained from the analog signals Ae and Be of the magnetic sensors MRE. In this case, the control unit determines that the magnetic sensors MRE are normal even though they are not normal. If the steering wheel is thereafter rotated in a predetermined direction and the radius value r1 varies in the direction indicated by arrow Y, the radius value r1 gradually becomes smaller as the steering wheel is rotated. The control unit determines that the magnetic sensors MRE are abnormal only after reaching position P2 on the elliptical path at which the radius value r1 is less than or equal to the lower limit CL.

In this manner, the occurrence of an abnormality in the magnetic sensors MRE when the power supply is deactivated cannot be detected unless the steering wheel is rotated by a predetermined angle after the power supply is activated. In other words, an erroneous rotational angle is output to the vehicle system as a normal value until abnormality of the magnetic sensors MRE is detected. This affects the reliability of the vehicle system. Such a problem is not only limited to detection of rotational displacement of a detection subject such as steering wheel and may also arise in the same manner when detecting displacement of a detection subject with a magnetic sensor MRE, for example, when detecting displacement of a detection subject that linearly moves.

The present invention provides a position detector, which detects displacement of a detection subject, allowing for immediate detection of an abnormality that occurs in the detector when a power supply is activated.

One aspect of the present invention is a position detector for detecting movement of a detection subject. The position detector includes a magnet which moves in cooperation with the movement of the detection subject. A magnetic sensor detects magnetic flux that changes in accordance with the movement of the magnet and includes two output terminals, which output first and second detection signals in accordance with the direction of the detected magnetic flux. The first and second detection signals have different phases. A signal processing circuit includes two input terminals to receive the first and the second detection signals and differentially amplify the first and the second detection signals to generate an analog signal. A control unit calculates the movement of the magnet as the movement of the detection subject based on the analog signal. An abnormality detection circuit is arranged between the two output terminals of the magnetic sensor and the two input terminals of the signal processing circuit to detect an abnormality in the magnetic sensor and the signal processing circuit. The abnormality detection circuit includes a first switching element which connects at least either one of the two output terminals of the magnetic sensor to ground based on a control signal provided from the control unit. The control unit determines the presence of an abnormality in the magnetic sensor and the signal processing circuit based on a voltage level of the analog signal output from the signal processing circuit in a state in which the first switching element is activated.

A further aspect of the present invention is a position detector for detecting movement of a detection subject. The position detector includes a magnet which moves in cooperation with the movement of the detection subject. A magnetic sensor detects magnetic flux that changes in accordance with the movement of the magnet. The magnetic sensor includes a first sensing circuit having first and second output terminals which output first and second detection signals having different phases in accordance with the direction of the detected magnetic flux. A second sensing circuit has third and fourth output terminals which output third and fourth detection signals having different phases in accordance with the direction of the detected magnetic flux. A first signal processing circuit differentially amplifies the first and second detection signals to generate a first analog signal. A second signal processing circuit differentially amplifies the third and the fourth detection signals to generate a second analog signal. A control unit calculates the movement of the magnet as the movement of the detection subject based on the first and the second analog signals. A first abnormality detection circuit includes a first switching element which enables connection of the first output terminal of the first sense circuit to ground and a second switching element which enables connection of the second output terminal of the first sense circuit to ground. A second abnormality detection circuit includes a third switching element which enables connection of the third output terminal of the second sense circuit to ground and a fourth switching element which enables connection of the fourth output terminal of the second sense circuit to ground. The control unit determines the presence of an abnormality in the first sensing circuit and the first signal processing circuit based on a voltage level of the first analog signal output from the first signal processing circuit when at least either one of the first and second switching elements is activated. Further, the control unit determines the presence of an abnormality in the second sensing circuit and the second signal processing circuit based on a voltage level of the second analog signal output from the second signal processing circuit when at least either one of the third and fourth switching elements is activated. The first and fourth switching elements form a first switching unit. The second and third switching elements form a second switching unit. The control unit generates a first control signal, which controls the first and fourth switching elements of the first switching unit, and a second control signal, which controls the second and third switching elements of the second switching unit.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:

Fig. 1 is a perspective view showing a magnetic sensor (MRE);

Fig. 2A is a waveform chart showing an analog signal generated by a magnetic sensor under a normal state in the prior art;

Fig. 2B is a waveform chart showing an analog signal generated by the magnetic sensor under an abnormal state in the prior art;

Fig. 3 is a diagram illustrating an abnormality detection process in the prior art;

Fig. 4 is a schematic plan view showing a first embodiment of a rotational angle detector;

Fig. 5 is a cross-sectional view taken along line A-A of Fig. 4;

Fig. 6 is a schematic electrical block diagram of the rotational angle detector in the first embodiment;

Fig. 7 is a schematic partial circuit diagram of the rotational angle detector of Fig. 6;

Fig. 8A is a waveform chart showing an input signal of a first differential amplifier circuit;

Fig. 8B is a waveform chart showing output signals of first and second differential amplifier circuits (third and fourth differential amplifier circuits);

Fig. 8C is a waveform chart showing a rotational angle of a first driven gear calculated based on the output signals of the first and the second differential amplifier circuits;

Fig. 8D is a waveform chart showing a rotational angle of a second driven gear calculated based on the output signals of the third and the fourth differential amplifier circuits;

Fig. 9A is a waveform chart showing an output signal having a high level generated by the operational amplifier;

Fig. 9B is a waveform chart showing an output signal having a low level generated by the operational amplifier;

Fig. 9C is a waveform chart showing an output signal having an offset level generated by the operational amplifier;

Fig. 10 is a flowchart showing the procedures of an abnormality detection process;

Fig. 11 is a table showing the combination of each output signal under a normal state and an abnormal state; and

Fig. 12 is a schematic circuit diagram showing a second embodiment of a rotational angle detector.

In the drawings, like numerals are used for like elements throughout.

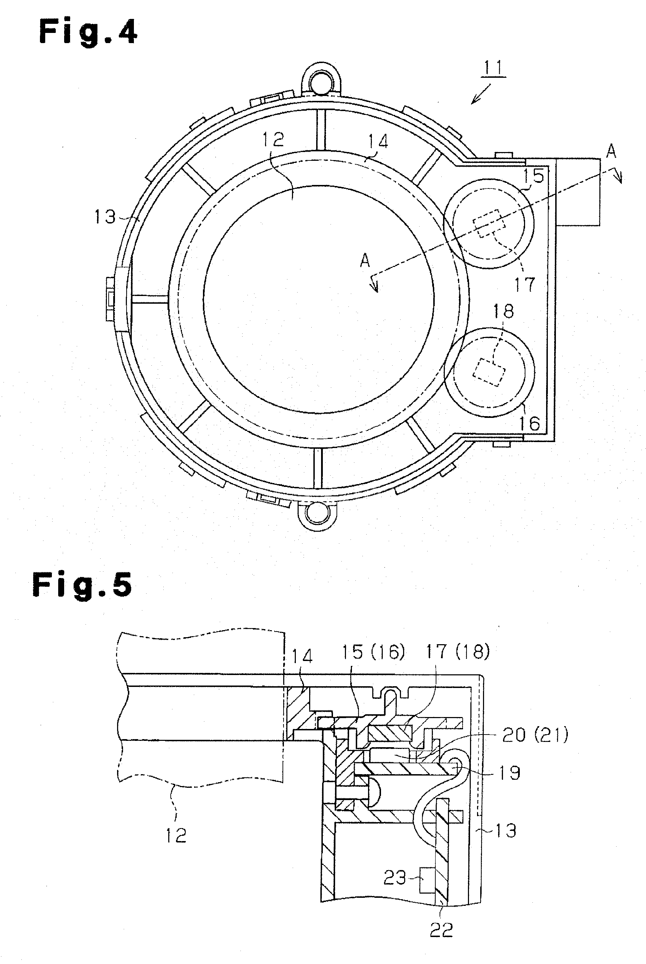

A first embodiment of a position detector according to the present invention will now be discussed with reference to Figs. 4 to 11. In the first embodiment, the position detector is embodied in a rotational angle detector 11 which detects the steering angle of a steering wheel.

As shown in Fig. 4, the rotational angle detector 11 is attached to a steering shaft 12, which is coupled to a steering wheel (not shown) so as to be integrally rotatable with the steering wheel. The rotational angle detector 11 includes a hollow housing 13 fixed to a structural body such as a steering column (not shown) so as to extend around the steering shaft 12. The housing 13 houses a main driving gear 14, which is fitted onto the steering shaft 12 so as to be integrally rotatable with the steering shaft 12, and rotatably supports first and second driven gears 15 and 16, which are engaged with the main driving gear 14. Therefore, rotation of the steering shaft 12 integrally rotates the main driving gear 14, which further rotates the first and the second driven gears 15 and 16. The first and second driven gears 15 and 16 have a different number of teeth. Thus, the rotational angles of the first and the second driven gears 15 and 16 differ relative to the rotational angle of the main driving gear 14. In the first embodiment, the main driving gear 14 has 102 teeth, the first driven gear 15 has 51 teeth, and the second driven gear 16 has 54 teeth. Thus, the first driven gear 15 rotates 180° whenever the main driving gear 14 rotates 90° (180°×51/102), and the second driven gear 16 rotates 180° whenever the main driving gear 14 rotates 95° (180°×54/102).

The first and second driven gears 15 and 16 are integrally rotatable with first and second magnets (permanent magnets) 17 and 18, respectively. As shown in Fig. 5, the first and the second magnets 17 and 18 are block-shaped and generate magnetic fluxes (magnetic fields) in the radial direction of the first and the second driven gears 15 and 16. The first and second magnets 17 and 18 are arranged so as to face a downward direction through an opening formed at the lower sides of the first and the second driven gears 15 and 16. When the first and the second driven gears 15 and 16 rotate once (rotate 360°), the direction of the magnetic fluxes generated by the first and the second magnets 17 and 18 are also rotated by 360°.

In the housing 13, a printed substrate 19 is arranged below the first and the second driven gears 15 and 16 extending perpendicular to the rotation axes of the first and the second driven gears 15 and 16. First and second magnetic sensors 20 and 21 are arranged on an upper surface of the printed substrate 19 so as to respectively face toward the first and the second magnets 17 and 18. In the housing 13, a further printed substrate 22 is arranged below the printed substrate 19 extending perpendicular to the printed substrate 19. A microcomputer 23 serving as a control unit is arranged on the surface of the printed substrate 22.

<Electrical Configuration

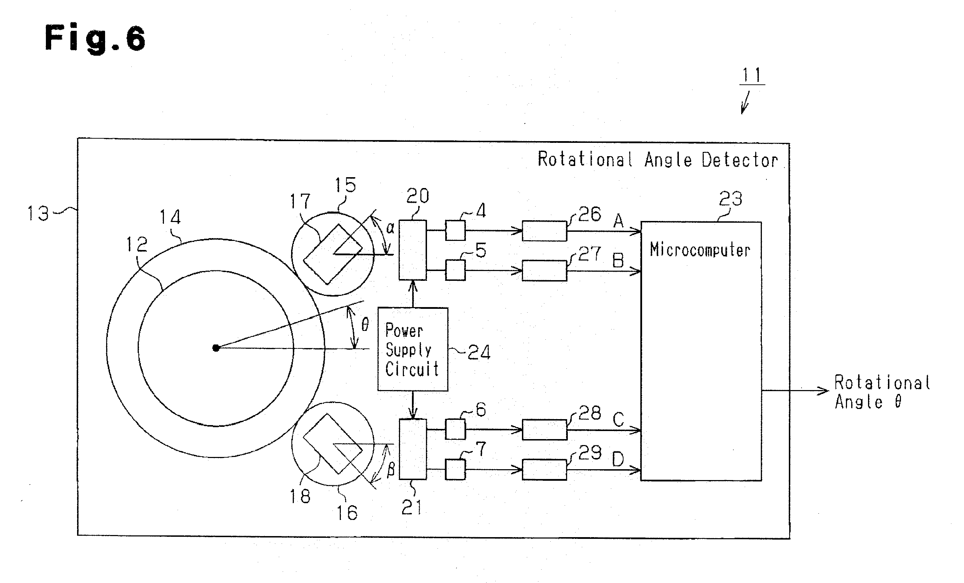

The electrical configuration of the rotational angle detector 11 will now be described. As shown in Fig. 6, the rotational angle detector 11 includes a power supply circuit 24, which generates voltage having a predetermined level, the first and the second magnetic sensors 20 and 21, which detecting the rotational angles $\alpha$ and $\beta$ of the driven gears 15 and 16 as electrical signals (detection signals), and first to fourth differential amplifier circuits 26 to 29 (signal processing circuits), which amplify the electrical signals output from the sensors 20 and 21 and provide the amplified electrical signals (analog signals) to the microcomputer 23.

A first abnormality detection circuit 4 is arranged between the first magnetic sensor 20 and the first differential amplifier circuit 26. A second abnormality detection circuit 5 is arranged between the first magnetic sensor 20 and the second differential amplifier circuit 27. A third abnormality detection circuit 6 is arranged between the second magnetic sensor 21 and the third differential amplifier circuit 28. A fourth abnormality detection circuit 7 is arranged between the second magnetic sensor 21 and the fourth differential amplifier circuit 29. The first abnormality detection circuit 4 detects abnormality in the first magnetic sensor 20 and the first differential amplifier circuit 26, and the second abnormality detection circuit 5 detects abnormality in the first magnetic sensor 20 and the second differential amplifier circuit 27. The third abnormality detection circuit 6 detects abnormality in the second magnetic sensor 21 and the third differential amplifier circuit 28, and the fourth abnormality detection circuit 7 detects abnormally in the second magnetic sensor 21 and the fourth differential amplifier circuit 29. The first to the fourth abnormality detection circuits 4 to 7 will now be described in detail.

The power supply circuit 24 converts the voltage supplied from a battery of a vehicle (not shown) to voltage having a predetermined level in correspondence with each part of the rotational angle detector 11 such as the first and second magnetic sensors 20 and 21 and the microcomputer 23. The first and the second magnetic sensors 20 and 21 and the microcomputer 23 are operated using the voltage having the predetermined level stably supplied from the power supply circuit 24 as an operational power.

<Magnetic Sensor>

The first magnetic sensor 20 of the first and the second magnetic sensors 20 and 21 will now be described in detail. The second magnetic sensor 21 is substantially identical to the first magnetic sensor 20 and thus will not be described in detail.

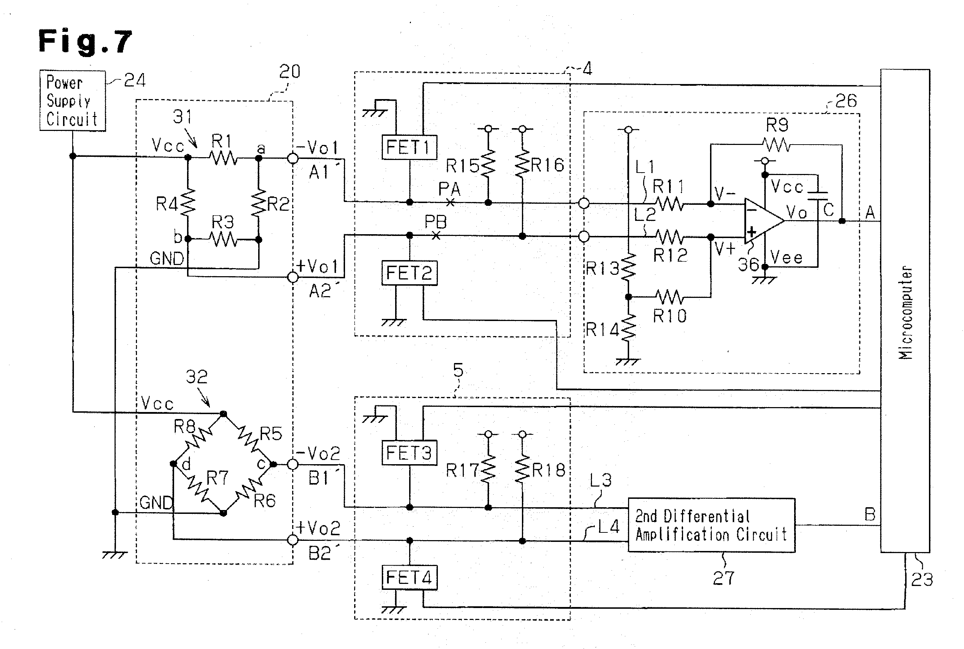

As shown in Fig. 7, the first magnetic sensor 20 includes a first bridge circuit 31 and a second bridge circuit 32, which is inclined by 45° relative to the first bridge circuit 31. The bridge circuits 31 and 32 each serve as a sensing circuit that detects magnetic flux. The first bridge circuit 31 includes four magnetic resistor elements R1 to R4. Specifically, the magnetic resistor element R1 and the magnetic resistor element R2 are connected in series, and the magnetic resistor element R3 and the magnetic resistor element R4 are connected in series. The series circuit including the magnetic resistor elements R1 and R2 is connected in parallel to the series circuit including the magnetic resistor elements R3 and R4. A median point a between the magnetic resistor element R1 and the magnetic resistor element R2 is connected to an output terminal -Vo1 of the first magnetic sensor 20, and a median point b between the magnetic resistor element R3 and the magnetic resistor element R4 is connected to an output terminal +Vo1 of the first magnetic sensor 20. A node of the magnetic resistor element R1 and the magnetic resistor element R4 is connected to the power supply circuit 24 via an input terminal Vcc of the first magnetic sensor 20, and a node of the magnetic resistor element R2 and the magnetic resistor element R3 is connected to ground via an input terminal GND of the first magnetic sensor 20.

The second bridge circuit 32 includes four magnetic resistor elements R5 to R8. Specifically, the magnetic resistor element R5 and the magnetic resistor element R6 are connected in series, and the magnetic resistor element R7 and the magnetic resistor element R8 are connected in series. The series circuit including the magnetic resistor elements R5 and R6 is connected in parallel to the series circuit including the magnetic resistor elements R7 and R8. A median point c between the magnetic resistor element R5 and the magnetic resistor element R6 is connected to an output terminal -Vo2 of the first magnetic sensor 20, and a median point d between the magnetic resistor element R7 and the magnetic resistor element R8 is connected to an output terminal +Vo2 of the first magnetic sensor 20. A node of the magnetic resistor element R5 and the magnetic resistor element R8 is connected to the power supply circuit 24 via the input terminal Vcc of the first magnetic sensor 20, and a node of the magnetic resistor element R6 and the magnetic resistor element R7 is connected to ground via the input terminal GND of the first magnetic sensor 20. In the present embodiment, voltage supplied from the power supply circuit 24 to each of the circuit elements is set to 5 V.

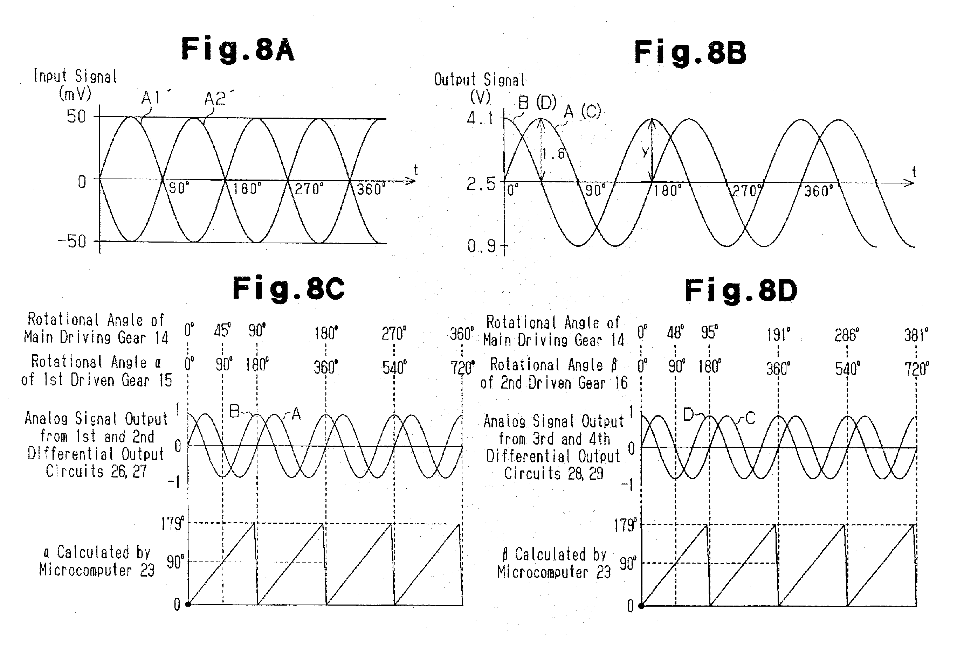

In each of the first and the second bridge circuits 31 and 32, the voltage having a predetermined level from the power supply circuit 24 is applied between the input terminal Vcc and the input terminal GND. The magnetic resistor elements R1 to R8 forming the first and second bridge circuits 31 and 32 have resistance values that vary in accordance with the externally applied magnetic field (specifically, direction of magnetic flux). When the direction of the magnetic flux generated by the first magnet 17 changes as the first driven gear 15 rotates, the magnetic field applied to the first and the second bridge circuits 31 and 32 changes. The first and the second bridge circuits 31 and 32 generate the potentials at the median points a and b and the potentials at the median points c and d in correspondence with changes in the applied magnetic field as the detection signals of the magnetic flux. For instance, the first bridge circuit 31 generates the potentials at the median points a and b as first and second detection signals A1' and A2', respectively. The second bridge circuit 32 generates the potentials at the median points c and d as third and fourth detection signals B1' and B2', respectively. As shown in Fig. 8A, the first and second detection signals A1' and A2' output from the first bridge circuit 31 are sine signals having reversed phases, that is, phases shifted by 90° (here, a single cycle is 180°). Although not shown in the drawings, it should be recognized by those skilled in the art that the third and the fourth detection signals B1' and B2' output from the second bridge circuit 32 are cosine signals having reversed phases, that is, phases shifted by 90° (here, a single cycle is 180°). In other words, the second bridge circuit 34 is inclined by 45° relative to the first bridge circuit 31 to form the sine signal and the cosine signal.

<Differential Amplifier Circuit>

As shown in Figs. 8B and 8C, the first differential amplifier circuit 26 differentially amplifies the first and second detection signals A1' and A2' output to the output terminals -Vo1 and +Vo1 of the first magnetic sensor 20 by a fixed gain based on an offset value to generate a first analog signal A. The second differential amplifier circuit 27 differentially amplifies the third and the fourth detection signals B1' and B2' output to the output terminals -Vo2 and +Vo2 of the first magnetic sensor 20 at a fixed gain based on an offset value to generate a second analog signal B. In the same manner as the first differential amplifier circuit 26, the third differential amplifier circuit 28 also generates a third analog signal C from the first and the second detection signals (not shown) of the second magnetic sensor 21 generated in the same manner as the first and the second detection signals A1' and A2' of the first magnetic sensor 20. Furthermore, in the same manner as the second differential amplifier circuit 27, the fourth differential amplifier circuit 29 also generates a fourth analog signal D from the third and the fourth detection signals (not shown) of the second magnetic sensor 21 generated in the same manner as the third and the fourth detection signals B1' and B2' of the first magnetic sensor 20. Accordingly, the first and third analog signals A and C are sine signals, and the second and fourth analog signals B and D are cosine signals. The first and second analog signals A and B change in accordance with the rotational angle $\alpha$ of the first driven gear 15, and the third and the fourth analog signals C and D continuously change in accordance with the rotational angle $\beta$ of the second driven gear 16.

Among the first to the fourth differential amplifier circuits 26 to 29, the first differential amplifier circuit 26 will now be described in detail. The second to fourth differential amplifier circuits 27 to 29 have substantially the same structure as the first differential amplifier circuit 26 and will not be described in detail.

As shown in Fig. 7, the first differential amplifier circuit 26 includes an operational amplifier 36. A capacitor C is connected in parallel to the operational amplifier 36 between a positive power supply terminal Vcc and a negative power supply terminal Vee of the operational amplifier 36. The operational amplifier 36 is powered by the voltage accumulated in the capacitor C to perform amplification operations. A negative phase input terminal V- of the operational amplifier 36 is connected to the output terminal -Vo1 of the first magnetic sensor 20 by a line L1, and a positive phase input terminal V+ is connected to the output terminal +Vo1 of the first magnetic sensor 20 by a line L2.

A resistor R9 is connected in parallel to the operational amplifier 36 between the output terminal Vo and the negative phase input terminal V- of the operational amplifier 36. In other words, the resistor R9 has one end connected to the negative phase input terminal V- and another end connected to the output terminal Vo. The node of the resistor R9 and the negative phase input terminal V- is connected to the output terminal -Vo1 of the first magnetic sensor 20 via a resistor R11 arranged in the line L1. A resistor R12 arranged in the line L2 connects the positive phase input terminal V+ of the operational amplifier 36 and the output terminal +Vo1 of the first magnetic sensor 20.

The first differential amplifier circuit 26 includes a series circuit formed by resistors R13 and R14, in which voltage having a predetermined level from the power supply circuit 24 is applied between the two terminals of the series circuit. The resistor R13 is connected to the power supply circuit 24, and the resistor R14, which is series connected to the resistor R13, is connected to ground. The node of the resistors R13 and R14 is connected to the node of the resistor R12 and the positive phase input terminal V+ via a resistor R10.

The resistors R9 to R12 are used to set the gain of the operational amplifier 36. When the resistors R9 and R10 have the same value, and the resistors R11 and R12 have the same value, the gain of the operational amplifier 36 is determined by the ratio of the resistor R9 and the resistor R11 (ratio of the resistor R10 and the resistor R12). In the first embodiment, the values of the resistors R9 to R12 are set such that the gain of the operational amplifier 36 is 16.

The resistors R13 and R14 are used to set the offset value of the operational amplifier 36. The offset value of the operational amplifier 36 is determined by dividing the value of the resistor R14 by the sum of the value of the resistor R13 and the value of the resistor R14 and then multiplying the divided value by the value of the power supply voltage (here, the voltage having a predetermined level supplied from the power supply circuit 24). In the first embodiment, the value of the voltage supplied from the power supply circuit 24 is 5.0 V, as described above. In this case, the values of the resistors R13 and R14 are set such that the offset value is 2.5 V in the first embodiment.

When Vout represents the output voltage of the operational amplifier 36, Vin1 represents the input voltage to the negative phase input terminal V- of the operational amplifier 36, Vin2 represents the input voltage to the positive phase input terminal V+, Ad represents the gain of the operational amplifier 36, and VOffset represents the offset value, Vout is calculated with the following equation.

$$Vout = (Vin1 - Vin2)Ad + VOffset$$

In one example, the first detection signal A1', which oscillates at an amplitude of 50 mV with 0 mV being the center, and the second detection signal A2', which has a reversed phase, are input to the first differential amplifier circuit 26, as shown in Fig. 8A. In this case, the first analog signal A or the output signal of the first differential amplifier circuit 26 (output voltage of the operational amplifier 36) is a sine signal that oscillates at an amplitude y of 1.6 V, the center of which is the offset value of 2.5 V, as shown in Fig. 8B.

The second analog signal B or the output signal of the second differential amplifier circuit 27 is a cosine signal that oscillates at an amplitude y of 1.6 V, the center of which is the offset value of 2.5 V. As described above, the second bridge circuit 32 is inclined by 45° relative to the first bridge circuit 31. Thus, the phase of the second analog signal B is shifted by 45° from the first analog signal A with respect to the rotational angle α of the first driven gear 15, as shown in Figs. 8B and 8C. In the same manner, as shown in Figs. 8B and 8D, the phase of the fourth analog signal D generated by the fourth differential amplifier circuit 29 is shifted by 45° relative to the third analog signal C generated by the third differential amplifier circuit 28 based on the detection of the magnetic flux by the second magnetic sensor 21.

As described above, the first driven gear 15 is rotated by 180° whenever the main driving gear 14 rotates 90°, as shown in Fig. 8C. When the first driven gear 15 is rotated by 180°, the magnetic flux generated by the first magnet 17 is also rotated by 186°. This substantially rotates the first magnetic sensor 20 relative to the first driven gear 15. When the direction of the magnetic flux applied to the first magnetic sensor 20 is changed by 180°, the first to fourth detection signals A1', A2', B1', and B2' of the first magnetic sensor 20 and the first and second analog signals A and B of the first and the second differential amplifier circuits 26 and 27 are changed by a single cycle. Accordingly, for example, when the rotational angle α of the first driven gear 15 is 0° and 180°, the first differential amplifier circuit 26 outputs the first analog signal A having the same voltage value and the second differential amplifier circuit 27 outputs the second analog signal B having the same voltage value (value differing from the analog signal A).

In the same manner, when the direction of the magnetic flux applied to the second magnetic sensor 21 is changed by 180°, the first to fourth detection signals (not shown) of the second magnetic sensor 21 as well as the third and fourth analog signals C and D (Fig. 8D) of the third and fourth differential amplifier circuits 28 and 29 change by a single cycle. Accordingly, for example, when the rotational angle β of the second driven gear 16 is 0° and 180°, the third differential amplifier circuit 28 outputs the third analog signal C of the same voltage value and the fourth differential amplifier circuit 29 outputs the fourth analog signal D of the same voltage value (value different from analog signal C). In Fig. 8D, the numerical value of the rotational angle θ for the main driving gear 14 is rounded off.

The microcomputer 23 includes a CPU, a ROM, a RAM, and an A/D converter (none of which are shown). The ROM stores various types of control programs for controlling the entire rotational angle detector 11. The control programs stored in the ROM may includes a rotational angle calculation program and an abnormality detection program. The rotational angle calculation program may be used to obtain the absolute value of the rotational angle θ of the main driving gear 14, or the steering shaft 12, based on the detection signals of the first and the second magnetic sensors 20 and 21, specifically, the first to fourth analog signals A to D from the first to the fourth differential amplifier circuits 26 to 29. The abnormality detection program may be used to detect an abnormality in the first and the second magnetic sensors 20 and 21 and the first to the fourth differential amplifier circuits 26 to 29. The RAM is a data storage region for deploying the control programs of the ROM and enabling the CPU to execute various types of processes. The A/D converter converts analog signals (first to fourth analog signals A to D output from the first to fourth differential amplifier circuits 26 to 29) into digital signals.

The microcomputer 23 calculates the rotational angle θ of the main driving gear 14 in accordance with the rotational angle calculation program stored in the ROM. For example, the microcomputer 23 first calculates the rotational angle α of the first driven gear 15 through an arctangent calculation based on the first and second analog signals A and B (sine signal and cosine signal) provided from the first and the second differential amplifier circuits 26 and 27. In the same manner, the microcomputer 23 calculates the rotational angle β of the second driven gear 16 through an arctangent calculation based on the third and the fourth analog signals C and D provided from the third and the fourth differential amplifier circuits 28 and 29. The values of the rotational angles α and β calculated by arctangent calculation vary so as to form a saw tooth-shaped waveform, which repeatedly rises and falls whenever the first and second driven gears 15 and 16 are rotated by 180°.

The microcomputer 23 calculates the rotational angle θ of the main driving gear 14 based on the calculated rotational angles α and β of the first and the second driven gears 15 and 16. Since the number of teeth differs between the first and the second driven gears 15 and 16 as described above, the reduction gear ratio (ratio of number of teeth) of the main driving gear 14 and the first driven gear 15 differs from the reduction gear ratio (ratio of number of teeth) of the main driving gear 14 and the second driven gear 16. In other words, since the second driven gear 16 has a greater number of teeth than the first driven gear 15 in the present example, the rotational period of the second driven gear 16 becomes longer than the rotational period of the first driven gear 15. Thus, when the steering wheel is rotated with the steering wheel at the neutral position (steering angle = 0°), the difference in the rotational angles α and β of the first and the second driven gears 15 and 16 changes linearly relatively to changes in the steering angle. In other words, the difference in the rotational angles α and β of the first and the second driven gears 15 and 16 has a unique value with respect to the rotational angle θ of the steering wheel, or the main driving gear 14. Thus, the rotational angle θ (absolute value) of the main driving gear 14, or the steering shaft 12, immediately be detected based on the difference in the rotational angles α and β.

Under this assumption, the microcomputer 23 calculates the absolute value (|α-β|) in the difference of the rotational angles α and β and then calculates the rotational angle θ based on the calculation result. The microcomputer 23 provides the calculated rotational angle θ to various systems such as the vehicle stability control system and electronic control suspension system to improve the traveling stability.

The microcomputer 23 executes the abnormality detection process of the first and the second magnetic sensors 20 and 21 and the first to the fourth differential amplifier circuits 26 to 29 in accordance with the abnormality detection program stored in the ROM. The abnormality detection process will be discussed later.

In the rotational angle detector 11, an abnormality such as a short circuit between terminals may occur for one reason or another in the first and the second magnetic sensors 20 and 21 as well as in the first to the fourth differential amplifier circuits 26 to 29. Such an abnormality appears as an abnormality in the detected rotational angle (jump etc.) or an abnormality in the output voltages of the first and the second magnetic sensors 20 and 21. Thus, the occurrence of an abnormality may be detected by monitoring changes in the rotational angle or the output voltages of the first and the second magnetic sensors 20 and 21. As described above, such an abnormality may be assumed to occur not only when the power supply is activated but also when the power supply is deactivated. However, immediate detection of an abnormality is difficult with the detection method of the prior art since the steering wheel must be rotated by a predetermined angle after the power supply is activated.

In the present example, referring to Fig. 6, after activation of the power supply, the first to fourth abnormality detection circuits 4 to 7 immediately detect an abnormality that occurred while the power supply was deactivated. Since each circuit has the same structure, only the first and the second abnormality detection circuits 4 and 5 corresponding to the first magnetic sensor 20 will be described, and the third and the fourth abnormality detection circuits 6, 7 will not be described.

As shown in Fig. 7, a pull-up resistor R15 has one terminal connected to the first line L1, which is connected between the output terminal -Vo1 of the first bridge circuit 31 and the first differential amplifier circuit 26 (specifically, negative phase input terminal V- of the operational amplifier 36), and another terminal, which is connected to the power supply circuit 24. A pull-up resistor R16 has one terminal connected to the second line L2, which is connected between the output terminal +Vo1 of the first bridge circuit 31 and the first differential amplifier circuit 26 (specifically, positive phase input terminal V+ of the operational amplifier 36), and another terminal connected to the power supply circuit 24. In the same manner, the pull-up resistors R17 and R18 each have a terminal respectively connected to third and fourth lines L3 and L4, which are connected between the output terminals -Vo2 and +Vo2 of the second bridge circuit 32 and the second differential amplifier circuit 27, and another terminal connected to the power supply circuit 24. The pull-up resistors R15 to R18 detect an abnormality (in particular, an open terminal) of the first magnetic sensor 20 as well as the first and the second differential amplifier circuits 26, 27. For instance, when the output terminal -Vo1 of the first magnetic sensor 20 opens, power supply voltage is applied to the terminal V- of the operational amplifier 36 by the pull-up resistor R15.

The microcomputer 23 is also connected to the gate terminals of four field-effect transistors FET1 to FET4, which serve as switching elements. The transistors FET1 to FET4 are also used to detect an abnormality in a circuit element such as the first and second magnetic sensors 20 and 21. The source terminals of the transistors FET1 to FET4 are connected to the lines L1 to L4 at positions closer to the first magnetic sensor 20 than the pull-up resistors R15 to R18. The drain terminals of the transistors FET1 to FET4 are connected to ground. The source and the drain are connected to each other when a control signal (voltage) from the microcomputer 23 is provided to the gates of the transistors FET1 to FET4. In other words, the lines L1 to L4, and ultimately, the terminals +Vo1; -Vo1, -Vo2, and +Vo2 of the first magnetic sensor 20 are connected to ground.

<Abnormality Detection Process>

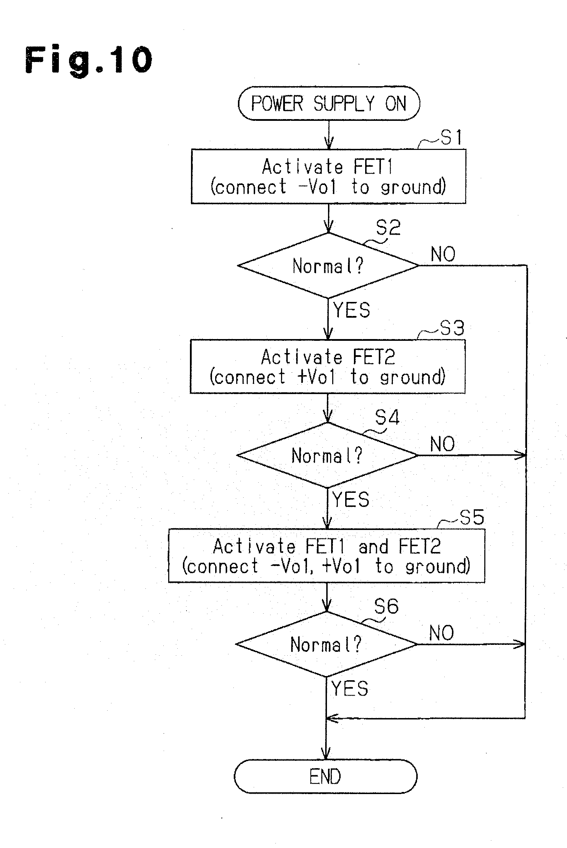

An abnormality detection process performed by the rotational angle detector 11 will now be discussed with reference to the flowchart of Fig. 10. The flowchart is executed by the microcomputer 23 based on the abnormality detection program, which is stored in the ROM and which is an initial check carried out when the power supply of the vehicle is activated.

The abnormality detection process is carried out to detect an abnormality in a circuit element that occurred when the power supply was deactivated such as an abnormality of the first and the second magnetic sensors 20 and 21 and/or an abnormality of the first to the fourth differential amplifier circuits 26 to 29 immediately after the power supply is activated. The abnormality of a circuit element refers to a terminal that becomes open and a short circuit between terminals.

Only the abnormality detection process performed on the first bridge circuit 31 of the first magnetic sensor 20 and the first differential amplifier circuit 26 will be described here. Since the abnormality detection of the circuit may be carried out in the same manner on the second bridge circuit 32 of the first magnetic sensor 20, the second magnetic sensor 21 (specifically, the first and second bridge circuits therein), and the second to fourth differential amplifier circuits 27 to 29, such abnormality detection will not be described in detail.

In the first embodiment, the presence of an abnormality is determined focusing on the fact that the value of the first analog signal A output from the first differential amplifier circuit 26 (specifically, operational amplifier 36) when the lines L1 and L2 (specifically, output terminals - Vo1, +Vo1) are connected to ground differs between a normal state and an abnormal state. First, the value of the first analog signal A when the lines L1 and L2 are connected to ground in a normal state will be described, and then the abnormality detection process will be described in detail. A normal state refers to a state in which the terminals of the first bridge circuit 31 and the first differential amplifier circuit 26 are neither open nor short circuited.

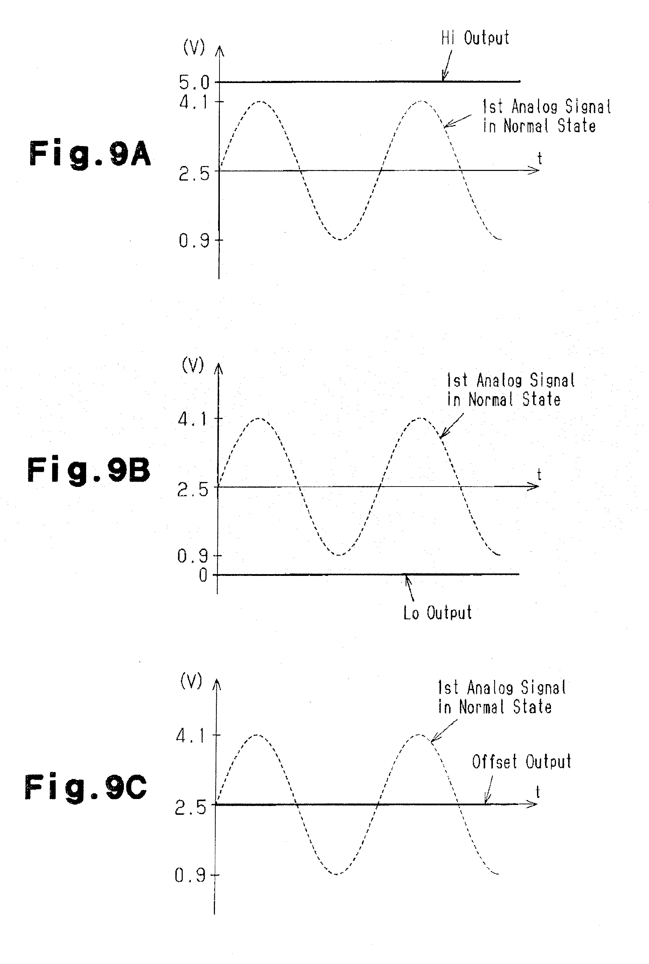

First, in a normal state, when the FET1 is activated upon activation of the power supply, the output terminal -Vo1 of the first magnetic sensor 20 is connected to ground. Therefore, the voltage applied to the negative phase input terminal V- of the operational amplifier 36 is zero. The voltage applied to the positive phase input terminal V+ of the operational amplifier 36 is 2.5 V (offset value). The potential difference between the negative phase input terminal V- and the positive phase input terminal V+ is thus 2.5 V. The output voltage Vout calculated by applying this potential difference to equation 2 becomes greater than or equal to the power supply voltage (5 V). However, the output voltage, that is, the first analog signal A that is actually output is fixed at a value of 4.9 V and greater and less than 5.0 V, as shown in Fig. 9A, due to the property of the operational amplifier 36 in which voltage that is greater than or equal to the power supply voltage cannot be output. In the present example, the microcomputer 23 recognizes a signal greater than or equal to a first threshold value (e.g., 4.9 V) as being a signal having a high level. The broken lines in Figs. 9A to 9C show the waveform (sine wave) of the first analog signal A under a normal state.

When the FET2 is activated in a state in which the power supply is activated, the output terminal +Vo1 of the first magnetic sensor 20 is connected to ground. Accordingly, the voltage applied to the positive phase input terminal V+ of the operational amplifier 36 is zero. The voltage applied to the negative phase input terminal V- is 2.5 V. The potential difference of the positive phase input terminal V+ and the negative phase input terminal V- is thus -2.5 V The output voltage Vout calculated from equation 2 becomes less than or equal to ground potential (0 V). However, the output voltage, that is, the first analog signal A that is actually output is fixed at 0 V, as shown in Fig. 9B, due to the property of the operational amplifier 36 in which the voltage of less than or equal to ground cannot be output. The microcomputer 23 recognizes the signal of less than or equal to a second threshold value (e.g., 0.1 V) as being a signal having a low level.

When the transistors FET1 and FET2 are simultaneously activated in a state in which the power supply is activated, the output terminals -Vo1 and +Vo1 of the first magnetic sensor 20 are both simultaneously connected to ground. Therefore, the voltage applied to the positive phase input terminal V+ and the negative phase input terminal V- is zero. The potential difference between the positive phase input terminal V+ and the negative phase input terminal V- is thus 0 V. The calculated output voltage Vout calculated from equation 2 is fixed at 2.5 V (offset value), as shown in Fig. 9C. The microcomputer 23 recognizes the signal of a value that is smaller than the first threshold value and greater than the second threshold value as an offset signal having an offset value level. Preferably, the microcomputer 23 recognizes a signal between 1.5 V and 3.5 V as an offset signal.

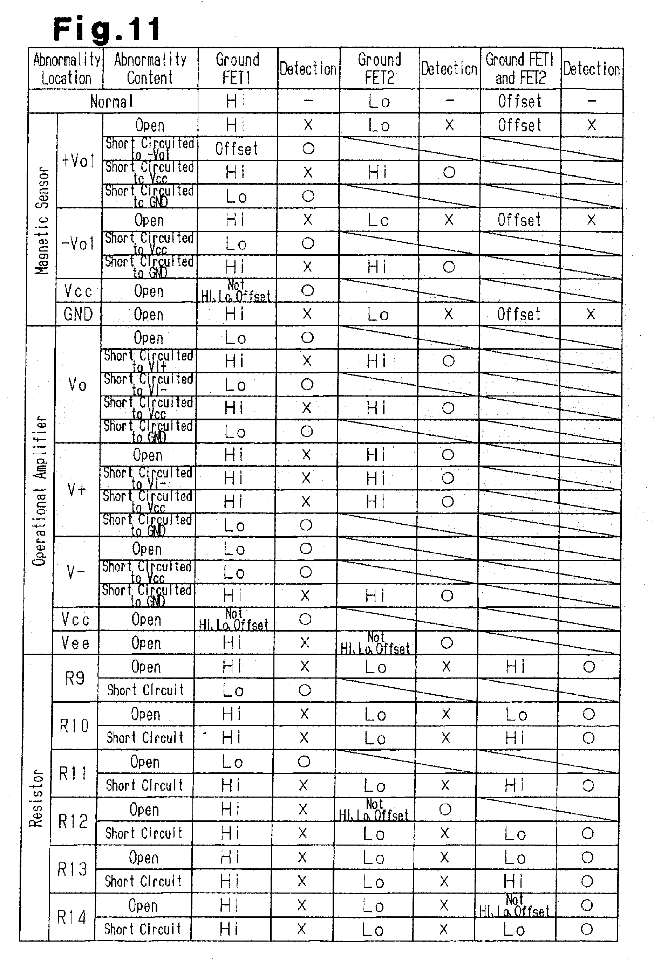

Accordingly, as shown in an upper row in Fig. 11, in a normal state, the output voltage, or the first analog signal A, is Hi (high level) when the FET1 is activated and the output terminal -Vo1 is connected to ground, Lo (low level) when the FET2 is activated and the output terminal +Vo1 is connected to ground, and Offset (offset value level) when the FET1 and the FET2 are simultaneously activated and the output terminals -Vo1 and +Vo1 are connected to ground.

The voltage levels (Hi, Lo, Offset) in a normal state output from the operational amplifier 36 in association with the activation and deactivation of the FET1 and the FET2 is stored in the ROM as a determination level. As described above, the microcomputer 23 determines the presence of an abnormality of a circuit element by comparing the voltage level of the first analog signal A input when the power supply is activated and the voltage level (Hi, Lo, Offset) of the output signal in a normal state stored in the ROM.

One example of an abnormality detection process will now be discussed with reference to Fig. 10. When the terminal +Vo1 and the terminal Vcc of the first magnetic sensor 20 (e.g., first bridge circuit 31) are short circuited in a state in which the power supply is deactivated, an abnormality is detected through the processing procedures described below.

When the power supply is activated, in step S1, the microcomputer 23 first outputs a control signal to the transistor FET1 and activates the transistor FET1 to connect the first line L1 (specifically, output terminal-Vo1 of first magnetic sensor 20) to ground. In this case, the output signal of the operational amplifier 36 is Hi. In step S2, the microcomputer 23 compares the output signal Hi with the output level (stored voltage level Hi) of the operational amplifier 36 when the FET1 is activated in a normal state. Here, the output signal is Hi in both the normal state and the abnormal state (see Fig. 11). Therefore, the microcomputer 23 determines that the abnormality is not present (YES in S2).

In step S3, the microcomputer 23 activates the transistor FET2. The output signal of the operational amplifier 36 in this case is Hi. In step S4, the microcomputer 23 compares the output signal Hi with the output level (stored voltage level Lo) of the operational amplifier 36 when the FET2 is activated in a normal state. Here, the output signal in a normal state is Lo, and the detected output signal is Hi (see Fig. 11). Therefore, the microcomputer 23 determines that there is an abnormality in the operational amplifier 36 or the first magnetic sensor 20 (specifically, first bridge circuit 31) (NO in S4) and then ends the abnormality detection process.

Although not described in detail here, as shown in an upper row in Fig. 11, a short circuit between the terminal -Vo1 of the first magnetic sensor 20 (e.g., first bridge circuit 31) and the terminals +Vo1, Vcc, and GND, and a short circuit between the terminal +Vo1 and the terminals - Vo1, Vcc, and GND may be detected in the same manner. The output level of the operational amplifier 36 when each of the input/output terminals -Vo1, +Vo1, Vcc, GND opens is the same as the output level in a normal state. Accordingly, an abnormality is not detected with the above-described method. The pull-up resistors R15 and R16 are used to detect an opening in each of the terminals-Vo1, +Vo1, Vcc, and GND. The detection of an opening with the pull-up resistors R15 and R16 will now be described in detail. If the terminal Vcc of the first magnetic sensor 20 opens, a signal (voltage value) that does not correspond to any one of a Hi output, a Lo output, and an Offset output is output. Thus, when the input terminal Vcc opens, it is determined that the first magnetic sensor 20 includes an abnormality.

Furthermore, an opening in each of the terminals Vo, V+, V-, and Vcc of the operational amplifier 36 and a short circuit between the terminals V+, V-, Vcc, and Vee may also be detected with a similar processing means. An abnormality detection process when the output terminal Vo and the input terminal Vcc of the operational amplifier 36 short circuit while the power supply is deactivated will be now be described with reference to Fig. 10. In this case, when the power supply is activated, the microcomputer 23 first outputs the control signal to the transistor FET1 and activates the transistor FET1 to connect the first line (specifically, output terminal -Vo1 of the first magnetic sensor 20) L1 to ground in step S1. In this case, the output signal of the operational amplifier 36 is Hi. In step S2, the microcomputer 23 compares the output signal Hi with the output level (stored voltage level Hi) of the operational amplifier 36 when the FET1 is activated in a normal state. Here, the output signal is Hi in both a normal state and an abnormal state (see Fig. 11). Therefore, the microcomputer 23 determines that there is no abnormality (YES in S2).

Then, in step S3, the microcomputer 23 activates the FET2. The output signal of the operational amplifier 36 in this case is Hi. In step S4, the microcomputer 23 compares the output signal Hi with the output level (stored voltage level Lo) of the operational amplifier 36 when the transistor FET2 is activated in a normal state. Here, the output signal in a normal state is Lo, and the detected output signal is Hi (see Fig. 11). Therefore, the microcomputer 23 determines that the abnormality is present in the operational amplifier 36 or the first magnetic sensor 20 (specifically, first bridge circuit 31) (No in S4) and ends the abnormality detection process.

Although not described in detail, an abnormality may be determined through similar processing procedures for an opening in each terminal in addition to a short circuiting between the terminals V+, V-, Vcc, and Vee of the operational amplifier 36.

Furthermore, an abnormality may be detected through similar processing procedures for short circuiting and an opening of the resistors R9 to R14, which set the gain and the offset value of the first differential amplifier circuit 26.

For example, an abnormality detection process for when the resistor R10 is open while the power supply is deactivated will be described with reference to Fig. 10. In this case, when the power supply is activated, In step S1, the microcomputer 23 first outputs a control signal to the FET1 and activates the transistor FET1 to connect the first line L1 (specifically, output terminal - Vo1 of first magnetic sensor 20) to ground. In this case, the output signal of the operational amplifier 36 is Hi. The microcomputer 23 then compares the output signal Hi with the output level (stored voltage level Hi) of the operational amplifier 36 when the FET1 is activated in a normal state. Here, the output signal is Hi in both a normal state and an abnormal state (see Fig. 11). Therefore, the microcomputer 23 determines that there is no abnormality (YES in S2).

In step S3, the microcomputer 23 activates the transistor FET2. The output signal of the operational amplifier 36 in this case is Lo. The microcomputer 23 compares the output signal Lo with the output level (stored voltage level Lo) of the operational amplifier 36 when the transistor FET2 is activated in a normal state. Here, the output signal is Lo in both a normal state and an abnormal state. Therefore, the microcomputer 23 determines that there is no abnormality (YES in S4).

In step S5, the microcomputer 23 simultaneously activates the transistors FET1 and FET2. In this state, the output signal of the operational amplifier 36 is Lo. In step S6, the microcomputer 23 compares the output signal Lo with the output level (stored voltage level Offset) of the operational amplifier 36 when the FET1 and the FET2 are activated in a normal state. Here, the output signal is Offset in a normal state, and the detected output signal is Lo (see Fig. 11). Therefore, the microcomputer 23 determines that the abnormality is present in the operational amplifier 36 or the first magnetic sensor 20 (specifically, first bridge circuit 31) (NO in S5) and ends the abnormality detection process.

At the same time as the first bridge circuit 31 of the first magnetic sensor 20, the abnormality detection process when an FET is activated or deactivated is performed in the same manner for the second bridge circuit 32. Furthermore, at the same time as the first magnetic sensor 20, the abnormality detection process when an FET is activated or deactivated is performed in the same manner for the first bridge circuit (corresponding to the first bridge circuit 31 of the first magnetic sensor 20) and second bridge circuit (corresponding to the second bridge circuit 32 of the first magnetic sensor 20) of the second magnetic sensor 21.

<Pull-Up Resistor>

In this manner, a short circuit between the terminals of the first magnetic sensor 20 (e.g., first bridge circuit 31) may be detected through an activation and deactivation control of the transistors FET1 and FET2, However, when the terminal of the magnetic sensor opens, the combination of output signals (voltage values) of the first differential amplifier circuit 26 is the same as that of a normal state as shown in an upper row in Fig. 11. Thus, an abnormality may not be detected.

Therefore, in addition to the abnormality detection process performed with the activation and deactivation control of the transistors FET1 and FET2, an opening in the output terminals - Vo1 and +Vo1 may be detected using the pull-up resistors R15 and R16 respectively arranged at the two output terminals -Vo1 and +Vo1 of the first magnetic sensor 20 (e.g., first bridge circuit 31).

The terminals +Vo1, -Vo1 of the first bridge circuit 31 are not connected to ground when the FET1 and the FET2 are not activated by the microcomputer 23. If the voltage level of the output signal of the operational amplifier 36 becomes Hi or Lo in this state, the microcomputer 23 determines that one of the terminals +Vo1, -Vo1, GND, and Vcc of the first magnetic sensor 20 (first bridge circuit 31) is open. For instance, if the output terminal -Vo1 of the first magnetic sensor 20 opens at point PA, which is marked by a cross in Fig. 7, a voltage of 5 V is applied to the negative phase input terminal V- of the operational amplifier 36. A voltage of about 2.5 V is applied to the positive phase input terminal V+. Therefore, the voltage level of the output signal of the operational amplifier 36 in this case is fixed at Lo level from equation 2. If the output terminal +Vo1 opens at point PB, which is marked by a cross in Fig. 7, a voltage of about 2.5 V is applied to the negative phase input terminal V-, and a voltage of 5 V is applied to the positive phase input terminal V+. Accordingly, equation 2 fixes the voltage level of the output signal in this state at a Hi level. Thus, the output of the operational amplifier 36 is fixed at a Hi level or a Lo level even if the transistors FET1 and FET2 are not activated. Therefore, the microcomputer 23 may detect an opening in the first magnetic sensor 20 (specifically, first bridge circuit 31).

An opening in each terminal may be detected in the same manner for the second bridge circuit 32 of the first magnetic sensor 20 as well as for the first bridge circuit (correspond to first bridge circuit 31) and the second bridge circuit (correspond to second bridge circuit 32) of the second magnetic sensor 21.

The rotational angle detector 11 of the first embodiment has the advantages described below.

(1) When the power supply is activated, the microcomputer 23 first connects the first line L1 (output terminal -Vo1) to ground, then connects the second line L2 (output terminal +Vo1) to ground, and finally connects the first line L1 (output terminal -Vo1) and the second line L2 (output terminal +Vo1) to ground. The microcomputer 23 compares the voltage level of the output signal of the first differential amplifier circuit 26 and the voltage level of the output signal in a normal state for each connection state to determine that there is an abnormality in the first magnetic sensor 20 or the first differential amplifier circuit 26 when the voltage level differs from the normal time. Therefore, an abnormality in the detector 11 that occurs when the power supply is deactivated is immediately detected when the power supply is activated. An abnormality includes a short circuit and an opening of the terminals (or between the terminals) Vcc, GND, - Vo1, and +Vo1 of the first magnetic sensor 20, short circuit and opening of the terminals (or between the terminals) of V+, V-, Vo, Vcc, the Vee of the first differential amplifier circuit 26, as well as an opening and short circuit of the resistors (or between the resistors) R9 to R14. An abnormality of the second magnetic sensor 21 and the second to the fourth differential amplifier circuits 27 to 29 that occurred while the power supply was deactivated is detected through a similar method. Therefore, an abnormality that occurred while the power supply was deactivated is detected when the power supply is activated without the need for rotating the steering wheel after the power supply is activated.

(2) If the output terminals -Vo1, +Vo1 of the first magnetic sensor 20 (e.g., first bridge circuit 31) are open, the signal of Hi or Lo is output from the first differential amplifier circuit 26 even if the FET1 and the FET2 are not activated. Accordingly, if Hi or Lo is output when the FET1 and the FET2 are deactivated, the microcomputer 23 determines that at least either one of the output terminals -Vo1 and +Vo1 is open. Thus, an opening in the output terminals -Vo1 and +Vo1 is detected without the need for rotating the steering wheel when the power supply is activated.

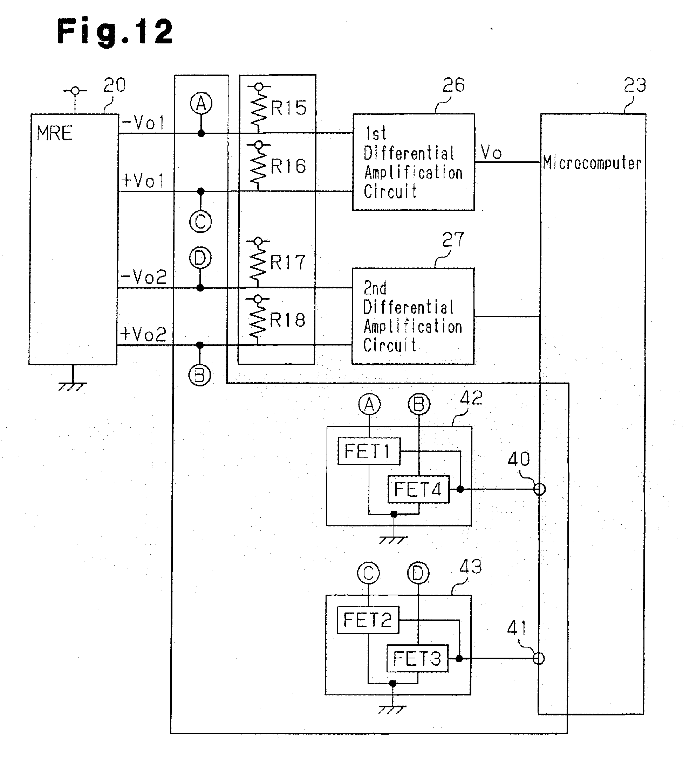

A second embodiment of a rotational angle detector according to the present invention will now be discussed with reference to Fig. 12. The rotational angle detector of the second embodiment differs from the first embodiment in that the transistors FET1 and FET4, as well as the transistors FET2 and FET3 are simultaneously switched.

Difference from the first embodiment will now be mainly discussed. The rotational angle detector of the second embodiment has a structure that is substantially the same as the structure of the first embodiment shown in Fig. 6. The microcomputer 23 includes a first port 40, which is connected to the gate terminals of the transistors FET1 and FET4, and a second port 41, which is connected to the gate terminals of the transistors FET2 and FET3. The transistors FET1 and FET4 form a first switching unit 42, and the transistors FET2 and FET3 form a second switching unit 43.

The source terminal of the transistor FET1 is connected to the output terminal -Vo1 as shown by a coupler A in Fig. 12, and the source terminal of the transistor FET4 is connected to the output terminal +Vo2 as shown by a coupler B. The drain terminals of the transistor FET1 and the transistor FET4 are connected to ground. In the same manner, the source terminal of the transistor FET2 is connected to the output terminal +Vo1 by a coupler C, and the source terminal of the transistor FET3 is connected to the output terminal -Vo2 by a coupler D. The drain terminals of the transistor FET2 and the transistor FET3 are connected to ground.

The abnormality detection process performed by the circuit element in the second embodiment will now be discussed. First, when the power supply is activated, the microcomputer 23 provides a control signal to the first switching unit 42 through the first port 40 and activates the transistor FET1 and the transistor FET4. This connects the output terminal -Vo1 of the first bridge circuit 31 and the output terminal +Vo2 of the second bridge circuit 32 to ground.

In this state, the microcomputer 23 detects an abnormality in the first and the second differential amplifier circuits 26 and 27 and the first magnetic sensor 20 in the same manner as in the first embodiment based on the voltage level (Hi, Lo, Offset) of each output signal in the first and second differential amplifier circuits 26 and 27. In other words, the voltage level of the output signal of the first differential amplifier circuit 26 is fixed at Hi and the voltage level of the output signal of the second differential amplifier circuit 27 is fixed at Lo when the first switching unit 42 (specifically, transistor FET1 and transistor FET4) is activated in a normal state. Therefore, the microcomputer 23 detects an abnormality if each detected voltage level differs from the corresponding voltage level in a normal state.

If an abnormality is not detected when the first switching unit 42 (FET1 and transistor FET4) is activated, the microcomputer 23 provides a control signal to the first and the second switching units 42 and 43 through the first and the second ports 40, 41 and turns on the transistors FET1 to FET4. This connects the output terminals -Vo1 and +Vo1 of the first bridge circuit 31 and the output terminals -Vo2 and +Vo2 of the second bridge circuit 32 to ground. In this state, the microcomputer 23 detects an abnormality in the first and second differential amplifier circuits 26 and 27 and the first magnetic sensor 20 in the same manner as in the first embodiment based on the output signals (Hi, Lo, Offset) of the first and second differential amplifier circuits 26 and 27. In other words, the voltage levels of the output signals of the first and the second differential amplifier circuits 26 and 27 both have offset value level (Offset) when the first and the second switching units 42 and 43 (specifically, transistors transistor FET1 to transistor FET4) are activated in a normal state. Therefore, the microcomputer 23 detects an abnormality if the detected voltage level does not have the Offset level.

If an abnormality still cannot be detected in this case, it is determined that there is no abnormality in the first magnetic sensor 20 and the first and second differential amplifier circuits 26 and 27. Although not shown in the drawings, the microcomputer 23 also includes a third port (corresponding to first port 40) and a fourth port (corresponding to second port 41), which connecting the two switching units corresponding to the second magnetic sensor 21. In this case, the abnormality detection process performed through the first and the second ports 40 and 41 and the abnormality detection process performed through the third and the fourth ports (correspond to first and second ports 40, 41) are simultaneously carried out.

The rotational angle detector 11 of the second embodiment has the advantages described below.

(3) The microcomputer 23 outputs a control signal through the first port 40 to simultaneously activate the transistor FET1 and the transistor FET4. This simultaneously connects the output terminals -Vo1 and +Vo2 to ground. The microcomputer 23 also outputs a control signal through the second port 41 to simultaneously activate the transistor FET2 and the transistor FET3. This simultaneously connects the output terminals +Vo1 and -Vo2 to ground. Thus, the microcomputer 23 does not output a control signal for individually switching the transistors FET1 to FET4. Rather, the microcomputer 23 outputs a control signal to the first port 40 and the second port 41 to simultaneously detect an abnormality in the first magnetic sensor 20 and the first and the second differential amplifier circuits 26 and 27. In the same manner, the microcomputer 23 provides a control signal to the third port (corresponding to first port 40) and the fourth port (corresponding to second port 41) connected to the output terminal of the second magnetic sensor 21 to detect an abnormality in the second magnetic sensor 21 and the third and the fourth differential amplifier circuits 28 and 29.

It should be apparent to those skilled in the art that the present invention may be embodied in many other specific forms without departing from the spirit or scope of the invention. Particularly, it should be understood that the present invention may be embodied in the following forms.

The rotation detector is not limited to a magneto-resistance effect (MRE) sensor and may be a giant magneto-resistance effect (GMR) sensor, which detect two outputs having reversed phases such as a sine wave and a cosine wave.

The magnetic sensor does not have to include two bridge circuits and may include only one bridge circuit. In other words, the position detector may detect the displacement of the detection subject using a magnetic sensor including a single bridge circuit. In this case, the position detector includes one magnetic sensor, one differential amplifier circuit, and one abnormality detection circuit arranged therebetween.

A magnetic sensor such as the full bridge type AMR sensor (first and second magnetic sensors 20 and 21) may detect linear displacement of a detection subject in addition to detecting rotational displacement of a detection subject. For instance, a magnet displaced In correspondence with linear displacement of a detection subject may be used to detect changes in the magnetic flux direction when the magnet is displaced. Accordingly, an abnormality may also be detected in this case.

Each of the first and the second magnetic sensors 20 and 21 may be formed by a single chip including two bridge circuits or may be formed by two chips, each including one bridge circuit.

The transistors FET1 to FET4 and the pull-up resistors R15 to R18 are used to detect an abnormality in a circuit. However, the pull-up resistors R15 to R18 may be eliminated if an opening in the output terminals -Vo1, +Vo1, -Vo2, and +Vo2 of the first magnetic sensor 20 do not need to be detected. Alternatively, the transistors FET1 to FET4 may be eliminated, and only an opening in the output terminals -Vo1, +Vo1, -Vo2, and +Vo2 may be detected.

The abnormality detection circuit 4 may include only the transistor FET1 connected to the line L1 or only the transistor FET2 connected to the line L2. In this case, the types of abnormalities that can be detected are limited (see Fig. 11). Therefore, it is preferable that the abnormality detection circuit 4 includes two transistors FET1 and FET2, as described above. In the same manner, the abnormality detection circuit 4 may include only the resistor R15 connected to the line L1 or only the resistor R16 connected to the line L2. The same applies to the other abnormality detection circuits 5 to 7.

In the abnormality detection circuit 4, one transistor FET (e.g., only transistor FET1) may be used to connect the output terminals -Vo1 and +Vo1 of the first magnetic sensor 20 to ground. In this case, the microcomputer 23 may detect only the opening and the short circuit of the resistors R9 to R14. The same applies to the other abnormality detection circuits 5 to 7.

In the abnormality detection circuit 4, one resistor (e.g., only resistor R15) may be used to apply the power supply voltage to the input terminals V- and V+ of the operational amplifier 36. The same applies to the other abnormality detection circuits 5 to 7.

In the first embodiment, the abnormality detection process based on the activation and deactivation of the transistor FET is simultaneously performed for the first magnetic sensor 20 (each bridge circuit) and the second magnetic sensor 21 (each bridge circuit). However, the abnormality detection process does not have to be simultaneously performed in such a manner. For instance, the abnormality detection process may be performed for the first bridge circuit 31 and the second bridge circuit 32 of the first magnetic sensor 20 one after another, and then the abnormality detection process may be performed for the first and the second bridge circuits of the second magnetic sensor 20 one after another.

In the second embodiment, the abnormality detection process performed through the first and second ports 40 and 41 and the abnormality detection process performed through the third and the fourth ports (corresponding to first and second ports 40 and 41) are simultaneously carried out. However, the abnormality detection processes do not have to be simultaneously carried out. The abnormality detection process performed through the first and the second ports 40 and 41 may first be performed, and then the abnormality detection process through the third and the fourth ports (correspond to first and second ports 40 and 41) may be performed.

The switching element for detecting the abnormality of the circuit element such as the magnetic sensor is not limited to the field effect transistors FET1 to FET4. The switching element may include a mechanical contact device that is activated and deactivated by a command from the microcomputer 23.

In the flowchart of the abnormality detection process shown in Fig. 10, the next abnormality detection is not performed, and the abnormality detection process is ended when determined that there is an abnormality in steps S2 and S4. However, the abnormality detection processes of all of S1 to S6 may be performed regardless of whether or not there is an abnormality. In this case, the microcomputer 23 compares all the input voltage levels with the voltage level of a normal state to determine that there is an abnormality if there is at least one voltage level that differs from a normal state.

In the abnormality detection process of the first embodiment, the transistor FET1 is first activated, the transistor FET2 is then activated, and the transistors FET1 and FET2 are finally simultaneously activated. However, such order for activated the transistors may be changed as required.

In the second embodiment, the control signal is first provided to the transistor FET1 and the transistor FET4 through the first port 40. The control signal is then provided to the transistor FET2 and the transistor FET3 through the second port 41 while maintaining a state in which the control signal is provided to the transistor FET1 and the transistor FET4. However, the order for providing the control signal through the first and the second ports 40 and 41 is not limited in such a manner. For example, the control signal may first be provided to the first port 40. The control signal may then be provided to the second port 41 in a state when the control signal is no longer provided to the first port 40. Finally, the control signal may be simultaneously provided to the first and the second ports 40 and 41.

The present examples and embodiments are to be considered as illustrative and not restrictive, and the invention is not to be limited to the details given herein, but may be modified within the scope and equivalence of the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A position detector (11) for detecting movement of a detection subject (14), the position detector comprising:

   a magnet (17) which moves in cooperation with the movement of the detection subject;
   a magnetic sensor (20) which detects magnetic flux that changes in accordance with the movement of the magnet and includes two output terminals (-Vo1, +Vo1), which output first and second detection signals (A1', A2') in accordance with the direction of the detected magnetic flux, with the first and second detection signals having different phases;
   a signal processing circuit (26) including two input terminals (V-, V+) to receive the first and the second detection signals and differentially amplify the first and the second detection signals to generate an analog signal (A);
   a control unit (23) which calculates the movement of the magnet as the movement of the detection subject based on the analog signal; and
   an abnormality detection circuit (4) arranged between the two output terminals of the magnetic sensor and the two input terminals of the signal processing circuit to detect an abnormality in the magnetic sensor and the signal processing circuit, with the abnormality detection circuit including a first switching element (FET1) which connects at least either one of the two output terminals of the magnetic sensor to ground based on a control signal provided from the control unit;

   wherein the control unit (23) determines the presence of an abnormality in the magnetic sensor (20) and the signal processing circuit (26) based on a voltage level of the analog signal (A) output from the signal processing circuit in a state in which the first switching element (FET1) is activated.

2. The position detector according to claim 1, wherein the abnormality detection circuit further includes:

   a first pull-up resistor (R15) which is arranged between the two output terminals of the magnetic sensor and the two input terminals of the signal processing circuit to apply power supply voltage to at least either one of the two input terminals of the signal processing circuit when an output line of the magnetic sensor is broken.

3. The position detector according to claim 2, wherein the first switching element (FET1) is connected to the output line of the magnetic sensor (20) at a position closer to the magnetic sensor than the first pull-up resistor (R15).

4. The position detector according to claim 1, wherein
the abnormality detection circuit includes:

the first switching element (FET1) connected to a first output terminal (-Vo1) of the two output terminals of the magnetic sensor; and
a second switching element (FET2) connected to a second output terminal (+Vo1) of the two output terminals of the magnetic sensor, and

the control unit activates the first and second switching elements individually or simultaneously.

5. The position detector according to claim 4, wherein the control unit (23) detects a short circuit in the magnetic sensor (20) by activating one of the first and second switching elements.

6. The position detector according to claim 4, wherein the control unit (23) detects a short circuit or an opening in the signal processing circuit (26) by activating at least either one of the first and second switching elements.

7. The position detector according to claim 2, wherein the abnormality detection circuit (4) includes:

the first pull-up resistor (R15) connected to a first output terminal (-Vo1) of the two output terminals of the magnetic sensor, and
a second pull-up resistor (R16) connected to a second output terminal (+Vo1) of the two output terminals of the magnetic sensor.

8. The position detector according to claim 7, wherein the first and second pull-up resistors (R15, R16) apply the power supply voltage to the first and second output terminals (-Vo1, +Vo1) of the magnetic sensor to detect an opening in the magnetic sensor with the control unit.

9. The position detector according to claim 4, further comprising:

a first line (L1) which connects the first output terminal (-Vo1) of the magnetic sensor and a first input terminal (V-) of the two input terminals of the signal processing circuit; and
a second line (L2) which connects the second output terminal (+Vo1) of the magnetic sensor and a second input terminal (V+) of the two input terminals of the signal processing circuit;
wherein the first switching element (FET1) includes a source terminal connected to the first line, a drain terminal connected to ground, and a gate terminal which receives the control signal from the control unit; and
the second switching element (FET2) includes a source terminal connected to the second line, a drain terminal connected to ground, and a gate terminal which receives the control signal from the control unit.

10. The position detector according to claim 9, wherein the abnormality detection circuit includes:

a first pull-up resistor (R15) connected to the first line to supply the power supply voltage to the first input terminal of the signal processing circuit; and
a second pull-up resistor (R16) connected to the second line to supply the power supply voltage to the second input terminal of the signal processing circuit.

11. The position detector according to claim 10, wherein:

the source terminal of the first switching element (FET1) is connected to the first line (L1) at a position closer to the first output terminal (-Vo1) of the magnetic sensor than the first pull-up resistor; and
the source terminal of the second switching element (FET2) is connected to the second line (L2) at a position closer to the second output terminal (+Vo1) of the magnetic sensor than the second pull-up resistor.

12. A position detector (11) for detecting movement of a detection subject (14), the position detector comprising:

a magnet (17) which moves in cooperation with the movement of the detection subject;

a magnetic sensor (20) which detects magnetic flux that changes in accordance with the movement of the magnet, with the magnetic sensor including a first sensing circuit (31) having first and second output terminals (-Vo1, +Vo1) which output first and second detection signals (A1', A2') having different phases in accordance with the direction of the detected magnetic flux, and a second sensing circuit (32) having third and fourth output terminals (-Vo2, +Vo2) which output third and fourth detection signals (B1', B2') having different phases in accordance with the direction of the detected magnetic flux;

a first signal processing circuit (26) which differentially amplifies the first and second detection signals to generate a first analog signal (A);

a second signal processing circuit (27) which differentially amplifies the third and the fourth detection signals to generate a second analog signal (B);

a control unit (23) which calculates the movement of the magnet as the movement of the detection subject based on the first and the second analog signals;

a first abnormality detection circuit (4) including a first switching element (FET1) which enables connection of the first output terminal (-Vo1) of the first sense circuit to ground and a second switching element (FET2) which enables connection of the second output terminal (+Vo1) of the first sense circuit to ground; and

a second abnormality detection circuit (5) including a third switching element (FET3) which enables connection of the third output terminal (-Vo2) of the second sense circuit to ground and a fourth switching element (FET4) which enables connection of the fourth output terminal (+Vo2) of the second sense circuit to ground;

wherein the control unit (23) determines the presence of an abnormality in the first sensing circuit (31) and the first signal processing circuit (26) based on a voltage level of the first analog signal output from the first signal processing circuit when at least either one of the first and second switching elements (FET1, FET2) is activated, and the control unit (23) determines the presence of an abnormality in the second sensing circuit (32) and the second signal processing circuit (27) based on a voltage level of the second analog signal output from the second signal processing circuit when at least either one of the third and fourth switching elements (FET3, FET4) is activated;

the first and fourth switching elements form a first switching unit (42);

the second and third switching elements form a second switching unit (43); and

the control unit (23) generates a first control signal, which controls the first and fourth switching elements of the first switching unit (42), and a second control signal, which controls the second and third switching elements of the second switching unit (43).

# Fig.1

MRE

P1 P2 P3 P4 P5 P6 P7 P8

# Fig.2A

Analog Signal Output from Magnetic Sensor (normal)

B A

1

0

90° 180° 270° 360° 540° 720°

−1

# Fig.2B

Analog Signal Output from Magnetic Sensor (abnormal)

Be Ae

1

0

90° 180° 270° 360° 540° 720°

−1

# Fig.3

# Fig.4

# Fig.5

Fig.6

**Fig.7**

EP 2 157 409 A2

# Fig.8A

Input Signal
(mV)

A1'    A2'

50

0    90°   180°  270°  360°    t

-50

# Fig.8B

Output Signal
(V)
B (D)   A (C)

4.1

1.6        y

2.5   0°   90°   180°  270°   360°    t

0.9

# Fig.8C

Rotational Angle of
Main Driving Gear 14    0°   45°  90°      180°     270°      360°

Rotational Angle a      0°   90°  180°     360°     540°      720°
of 1st Driven Gear 15

Analog Signal Output    1
from 1st and 2nd            B          A
Differential Output     0
Circuits 26, 27
                        -1

a Calculated by         179°
Microcomputer 23        90°

                        0

# Fig.8D

Rotational Angle of
Main Driving Gear 14    0°   48°  95°     191°     286°      381°

Rotational Angle β      0°   90°  180°    360°     540°      720°
of 2nd Driven Gear 16

Analog Signal Output    1
from 3rd and 4th            D         C
Differential Output     0
Circuits 28, 29
                        -1

β Calculated by         179°
Microcomputer 23        90°

                        0

EP 2 157 409 A2

## Fig.9A

(V)

Hi Output

5.0
4.1

1st Analog Signal
in Normal State

2.5

t

0.9

## Fig.9B

(V)

1st Analog Signal
in Normal State

4.1

2.5

t

0.9
0

Lo Output

## Fig.9C

(V)

1st Analog Signal
in Normal State

4.1

Offset Output

2.5

t

0.9

# Fig.10

```
        ( POWER SUPPLY ON )
                 │
                 ▼              ~S1
    ┌────────────────────────────┐
    │        Activate FET1        │
    │  (connect -Vol to ground)   │
    └────────────────────────────┘
                 │
                 ▼        S2
              ◇─────────◇        NO
             ◇  Normal?  ◇──────────────┐
              ◇─────────◇               │
                 │ YES                  │
                 ▼              ~S3      │
    ┌────────────────────────────┐      │
    │        Activate FET2        │      │
    │  (connect +Vol to ground)   │      │
    └────────────────────────────┘      │
                 │                       │
                 ▼        S4             │
              ◇─────────◇        NO      │
             ◇  Normal?  ◇──────────────┤
              ◇─────────◇               │
                 │ YES                  │
                 ▼              ~S5      │
    ┌────────────────────────────┐      │
    │    Activate FET1 and FET2   │      │
    │ (connect -Vol, +Vol to ground)│    │
    └────────────────────────────┘      │
                 │                       │
                 ▼        S6             │
              ◇─────────◇        NO      │
             ◇  Normal?  ◇──────────────┤
              ◇─────────◇               │
                 │ YES                  │
                 ◄──────────────────────┘
                 │
                 ▼
            (    END    )
```

# Fig.11

| Abnormality Location | | Abnormality Content | Ground FET1 | Detection | Ground FET2 | Detection | Ground FET1 and FET2 | Detection |
|---|---|---|---|---|---|---|---|---|
| Normal | | | Hi | − | Lo | − | Offset | − |
| Magnetic Sensor | +Vo1 | Open | Hi | X | Lo | X | Offset | X |
| | | Short Circuited to −Vo1 | Offset | O | | | | |
| | | Short Circuited to Vcc | Hi | X | Hi | O | | |
| | | Short Circuited to GND | Lo | O | | | | |
| | −Vo1 | Open | Hi | X | Lo | X | Offset | X |
| | | Short Circuited to Vcc | Lo | O | | | | |
| | | Short Circuited to GND | Hi | X | Hi | O | | |
| | Vcc | Open | Not Hi, Lo, Offset | O | | | | |
| | GND | Open | Hi | X | Lo | X | Offset | X |
| Operational Amplifier | Vo | Open | Lo | O | | | | |
| | | Short Circuited to Vi+ | Hi | X | Hi | O | | |
| | | Short Circuited to Vi− | Lo | O | | | | |
| | | Short Circuited to Vcc | Hi | X | Hi | O | | |
| | | Short Circuited to GND | Lo | O | | | | |
| | V+ | Open | Hi | X | Hi | O | | |
| | | Short Circuited to Vi− | Hi | X | Hi | O | | |
| | | Short Circuited to Vcc | Hi | X | Hi | O | | |
| | | Short Circuited to GND | Lo | O | | | | |
| | V− | Open | Lo | O | | | | |
| | | Short Circuited to Vcc | Lo | O | | | | |
| | | Short Circuited to GND | Hi | X | Hi | O | | |
| | Vcc | Open | Not Hi, Lo, Offset | O | | | | |
| | Vee | Open | Hi | X | Not Hi, Lo, Offset | O | | |
| Resistor | R9 | Open | Hi | X | Lo | X | Hi | O |
| | | Short Circuit | Lo | O | | | | |
| | R10 | Open | Hi | X | Lo | X | Lo | O |
| | | Short Circuit | Hi | X | Lo | X | Hi | O |
| | R11 | Open | Lo | O | | | | |
| | | Short Circuit | Hi | X | Lo | X | Hi | O |
| | R12 | Open | Hi | X | Not Hi, Lo, Offset | O | | |
| | | Short Circuit | Hi | X | Lo | X | Lo | O |
| | R13 | Open | Hi | X | Lo | X | Lo | O |
| | | Short Circuit | Hi | X | Lo | X | Hi | O |
| | R14 | Open | Hi | X | Lo | X | Not Hi, Lo, Offset | O |
| | | Short Circuit | Hi | X | Lo | X | Lo | O |

# Fig.12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008214454 A
- JP 2004309222 A
- JP 2007298291 A